# EUROPEAN PATENT SPECIFICATION

(11) **EP 2 027 417 B1**
(45) Date of publication and mention of the grant of the patent: **30.04.2014**
(21) Application number: 07786727.3
(22) Date of filing: 08.06.2007
(51) Int. Cl.: F24C 7/06, F24C 7/08, A47J 37/06, H05B 3/00

(54) **AN OVEN**
OFEN
FOUR

(30) Priority: 09.06.2006 TR 200602949
(43) Date of publication of application: 25.02.2009
(73) Proprietor: Arçelik Anonim Sirketi, 34950 Istanbul (TR)
(72) Inventor: KANDEMIR, Nihat, 34950 Istanbul (TR); MARASLI, Mehmet, 34950 Istanbul (TR); IBICEK, Tulay, 34950 Istanbul (TR); KANTAS, Murat, 34950 Istanbul (TR)
(86) International application number: PCT/EP2007/055659
(87) International publication number: WO 2007/141332

(56) References cited:
- EP-A- 0 966 180
- WO-A-00/40912
- WO-A-01/12043
- WO-A-2007/054917
- US-A- 3 281 575
- US-A- 5 938 959
- US-A1- 2003 168 440

## Description

The present invention relates to an oven wherein a homogeneous cooking process is accomplished.

Light wave sources such as halogen, infrared heaters that function with the irradiation effect are utilized in ovens in order to achieve the desired quality or speed of roasting/cooking in ovens. The light wave sources are generally comprised of rod-like tubes and are mounted on the ceiling of the oven being parallel to each other and provide to send light wavelengths having the effect of cooking over the food cooked on the tray. In these types of ovens, the mounting spacing of the light wave sources used has an important effect on heat distribution in order to cook the food items homogeneously. The layout of the light wave sources used in the ovens may cause partial searing in some regions in the tray because of the intersection of the beams emitted from the light wave sources. When the beams emitted from the light wave sources affect on separate regions on the tray, some portions of the food may be left uncooked.

In the United States of America patent application no. US 2003168440, a lightwave oven includes a cooking chamber and at least one lightwave heating device that can be moved to and fro on a travel path between a first position and a second position. Furthermore, reflectors are used which are pivotally rotated for focusing the light waves in the direction of the cooked food.

The document WO 01/12043-A- discloses an oven comprising a cooking chamber, a cooking tray and more than one lightwave source secured on the ceiling of the cooking chamber.

The document US3281575-A- discloses a broiling apparatus comprising a flat reflector for downward reflection of heat; heating means closely underlying said reflector and whereto the reflector is removably secured.

The aim of the present invention is the realization of an oven wherein lightwave heating devices are utilized and the positions of the lightwave sources are adjusted whereby achieving homogeneous cooking.

The oven realized in order to attain the aim of the present invention is explicated in claim 1. Further embodiments are explicated in the dependent claims.

The oven of the present invention wherein cooking process is carried out by the irradiation effect, a level sensor is used that detects the distance between the upper surface of the food to be cooked in the tray and the lightwave source and the control unit determines the position where the lightwave sources will be moved depending on the distance data received from the level sensor.

In the oven, furthermore a movement mechanism is utilized, that provides the lightwave sources to be moved to new positions if the tray level or the level of food cooked in tray changes.

The required distance between the lightwave sources is determined by the control unit such that the light beams emitted by the lightwave sources with a certain angle sweep side by side a region with a certain width on the upper surface of the food cooked in the tray and no uncooked region of the food in the tray remains.

At the same time, the required distance between the lightwave sources is determined by the control unit such that the light beams emitted by the lightwave sources with a certain angle do not intersect with each other and the searing of the food is avoided.

In the oven of the present invention, furthermore, depending on the distance information between the upper surface of the food cooked in the tray and the lightwave sources, the control unit may energize or de-energize one or more lightwave sources and thus the power delivered to the lightwave sources hence the irradiation intensity thereof can be changed.

Furthermore, depending on the distance information between the upper surface of the food cooked in the tray and the lightwave sources, the lightwave sources can be moved with different speeds by the movement mechanism during the cooking process, can be kept at the desired positions or moved closer to each other thus providing to send intensive irradiation to certain regions of the tray.

In the oven of the present invention, the uncooked regions of the food and searing of food is prevented, the entire upper surface of the food cooked in the tray is swept by equivalent rates of irradiation effect providing homogeneous cooking.

The oven realized in order to attain the aim of the present invention is illustrated in the attached figures, where:

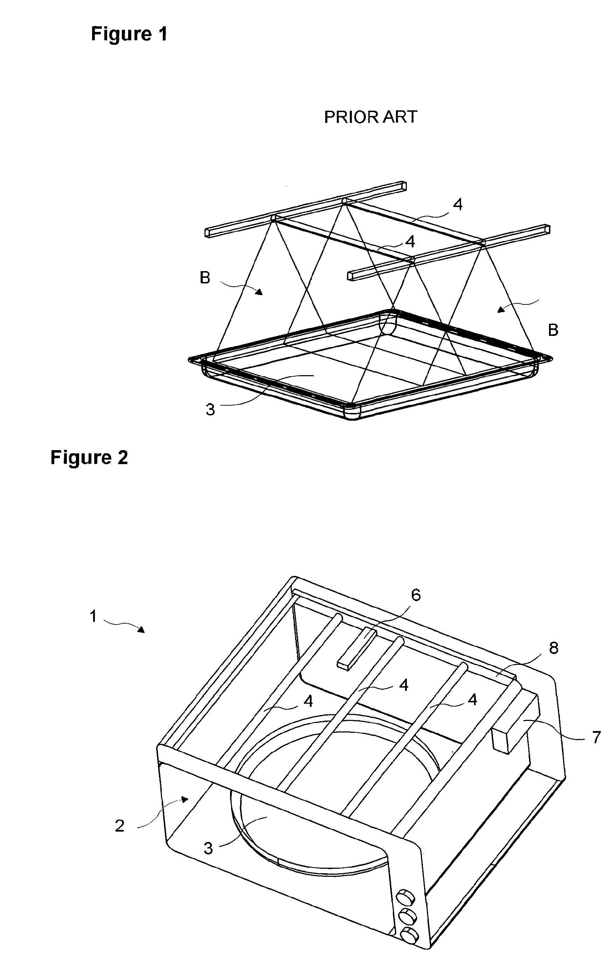

Figure 1 - is the schematic view of a tray and the lightwave sources used in the cooking process in prior art.
Figure 2 - is the schematic view of the oven in the present invention.
Figure 3 - is the schematic view of a lightwave source and a tray.
Figure 4 - is the schematic view of an oven wherein two lightwave sources are energized.

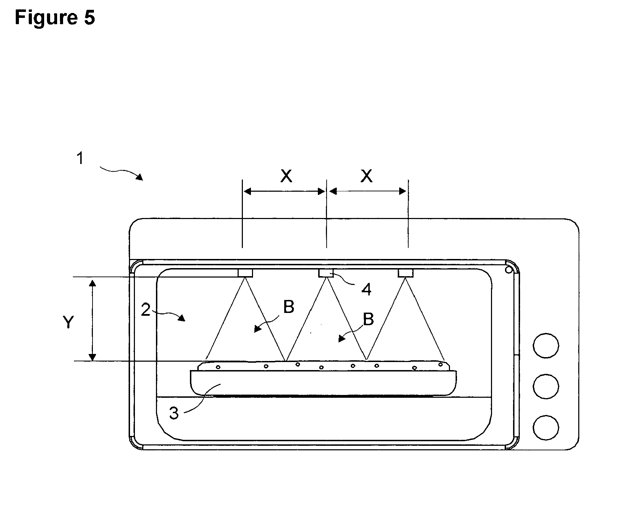

Figure 5 - is the schematic view of an oven wherein three lightwave sources are energized.

The elements illustrated in the figures are numbered as follows:
1. Oven
2. Cooking chamber
3. Tray
4. Lightwave source
5. Reflector
6. Level sensor
7. Control unit
8. Movement mechanism

The oven (1) comprises a cooking chamber (2) wherein the cooking process is carried out, a tray (3) in which food to be cooked is emplaced and one or more lightwave sources (4) situated on the ceiling of the cooking chamber (2), and movable in the cooking chamber (2), providing to carry out the cooking process by means of the light waves emitted.

An infrared lamp rod is used preferably as the lightwave source (4) that emits light in wavelengths that preferably cook by both shallow and deep penetration of the food in the tray (3).

The oven (1) furthermore comprises more than one reflector (5), disposed over each lightwave source (4), that provide to emit light beams from the ceiling of the cooking chamber (2) towards over the tray (3) with a certain angle (2A) such that the light beams sent over the tray (3) effectively sweep the area on the tray (3) partially or entirely.

The reflector (5) is preferably applied in the form of a paint or similar coating that covers a certain area above the glass tube containing the lightwave source (4).

The oven (1) of the present invention comprises a level sensor (6) that detects the distance (Y) between the upper surface of the food cooked in the tray (3) and the lightwave source (4), a control unit (7) that determines the positions where the lightwave sources (4) will be moved depending on the distance (Y) information received from the level sensor (6) and a movement mechanism (8) that moves the lightwave sources (4) providing to change their positions in case the distance (Y) between the upper surface of the food cooked in the tray (3) and the lightwave source (4) changes.

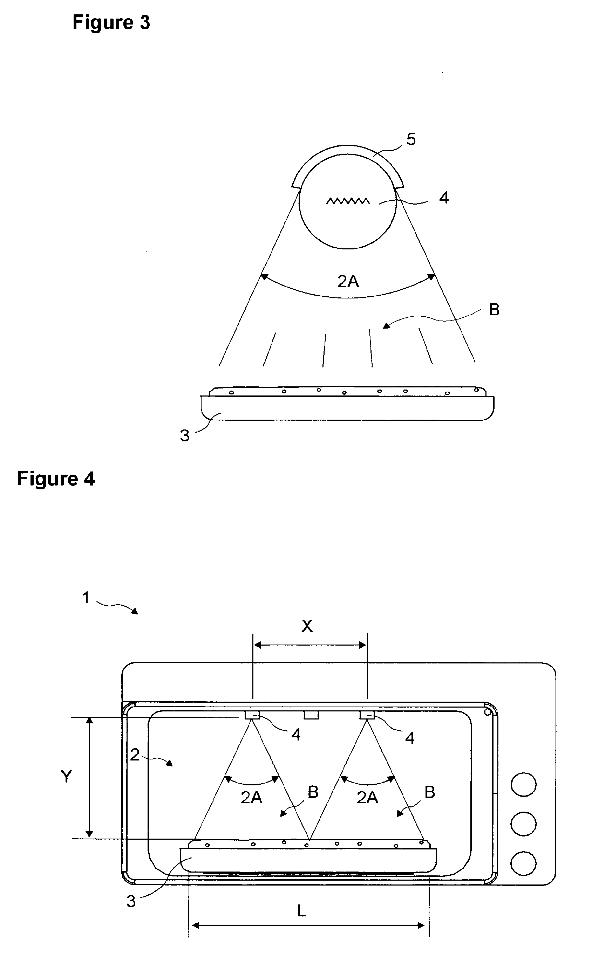

In an embodiment of the present invention, the required distance (X) between any two adjacent lightwave sources (4) over the tray (3) is determined with X = 2Y.tanA equality by the control unit (7) such that that there is no space left between the areas swept on the tray (3) by the light beams (B) sent by the two lightwave sources (4) with a certain angle (2A) and that they do not intersect with each other (Figure 4).

The required horizontal distance (X) between the adjacent lightwave sources (4) is determined by the control unit (7) depending on the lightwave source (4) - tray (3) distance (Y) information detected by the level sensor (6), the two lightwave sources (4) are moved by the movement mechanism (8) to bring to the determined distance (X) and a region of a certain width (L) is swept by an equal rate of irradiation effect.

The required distance (X) between adjacent lightwave sources (4) is determined by the control unit (7) such that the light beams (B) sent from the lightwave sources (4) with a certain angle (2A) sweep side by side a certain width (L) of region on the upper surface of the food cooked in the tray (3) and consequently uncooked regions of the cooked food in the tray (3) are prevented.

The required distance (X) between adjacent lightwave sources (4) is determined by the control 1 unit (7) such that the light beams (B) sent from the lightwave sources (4) with a certain angle (2A) do not intersect with each other and accordingly formation of searing of the cooked food in the tray (3) is prevented.

Since generally food items that cover the entire upper surface of the tray (3) is cooked on the tray (3), the width (L) of the total area to be swept by the light beams (B) is chosen to be close to the width of the tray (3) and thus the entire upper surface of the tray (3) is swept by the light beams (B) with an equal rate of irradiation effect.

In the embodiment of the present invention, during cooking of pastry such as cakes, the distance (Y) detected by the level sensor (6) between the upper surface and the lightwave source (4) changes as long as the food item cooked in the tray (3) rises and falls, and the distance (X) between the lightwave sources (4) is changed by the control unit (7) and the movement mechanism (8) depending on this changed distance (Y).

In the embodiment of the present invention, when food items that do not change height during cooking are cooked in the tray (3), the distance (X) between the lightwave sources (4) is adjusted to the level that the tray (3) is emplaced initially, and if the level of the tray (3) is changed by the user during cooking, then the new distance (Y) between the food item on the tray (3) and the lightwave source (4) is detected by the level sensor (6) and the distance (X) between the lightwave sources (4) is adjusted by the control unit (7) and the movement mechanism (8).

In another embodiment of the present invention, when the distance (Y) between the upper surface of the food items cooked in the tray (3) and the lightwave source (4) changes during cooking, the control unit (7) energizes or de-energizes one or more lightwave sources (4) such that the light beams (B) will affect side by side regions on the upper surface of the food items cooked on the tray (3).

In this embodiment, when for example three adjacent and parallel light wave sources (4) on the ceiling of the cooking chamber (2) are used, the lightwave source (4) in the middle is energized or de-energized by the control unit (7) depending on the changing distance (Y). For example, when the distance (Y) is increased by lowering the tray (3) down to a lower level, the light beams (B) sent by the three lightwave sources (4) start intersecting one another and since only increasing the distance (X) between the lightwave sources (4) will not be sufficient to prevent this condition, the lightwave source (4) in the middle is de-energized, and similarly when the tray (3) is taken to a higher level or the food item cooked in the tray (3) rises decreasing the distance (Y), the light beams (B) sent by the two lightwave sources (4) start affecting regions separate from each other and the lightwave source (4) in the middle is energized since decreasing the distance (X) between the lightwave sources (4) will not be sufficient.

In another embodiment of the present invention, the control unit (7) adjusts the power delivered to the lightwave sources (4) depending on the distance (Y) information received from the level sensor (6).

In another embodiment of the present invention, the movement mechanism (8) moves the lightwave sources (4) with different speeds during the cooking process depending on the distance (Y) information received from the level sensor (6) by the control unit (7).

In another embodiment of the present invention, the movement mechanism (8) keeps the lightwave sources (4) at the desired positions for certain time intervals depending on the distance (Y) information received from the level sensor (6) by the control unit (7), providing the cooking process to be carried out.

In another embodiment of the present invention, the movement mechanism (8) moves the lightwave sources (4) closer to each other depending on the distance (Y) information received from the level sensor (6) by the control unit (7), providing to send intensive light to certain regions on the tray (3). Consequently, for example the desired regions at the upper region of the food on the tray (3) are roasted and the regions not cooked yet are provided to be cooked faster.

In the oven (1) of the present invention, homogeneous light distribution and cooking with the desired quality and speed is accomplished in any kind of tray (3) - lightwave source (4) distance (Y) by adjusting the distance (X) between the lightwave sources (4) situated on the ceiling of the cooking chamber (2). The uncooked portions of the food and the formation of searing is prevented, the upper surface of the food on the tray (3) is provided to be swept by irradiation evenly, providing a homogeneous cooking.

## Claims

1. An oven (1) comprising a cooking chamber (2) wherein the cooking process is carried out, a tray (3) in which food to be cooked is emplaced and more than one lightwave source (4) situated on the ceiling of the cooking chamber (2) providing to carry out the cooking process by the light waves emitted and **characterized in that** the more one lightware source (4) are movable in the cooking chamber (2) and by a level sensor (6) a detects the distance (Y) between the upper surface of the food cooked in the tray (3) and the lightwave source (4), and a control unit (7) that determines the positions where the lightwave sources (4) will be moved depending on the distance (Y) information received from the level sensor (6).

2. An oven (1) as in Claim 1, **characterized by** a movement mechanism (8) that moves the lightwave sources (4) providing to change their positions in case the distance (Y) between the upper surface of the food cooked in the tray (3) and the lightwave source (4) changes.

3. An oven (1) as in Claim 1 or 2, **characterized in that** the control unit (7) determines the required distance (X) between the lightwave sources (4) such that the light beams (B) sent from the lightwave sources (4) with a certain angle (2A) sweep side by side a certain width (L) of region on the upper surface of the food cooked in the tray (3).

4. An oven (1) as in any one of the above claims, **characterized in that** the control unit (7) determines the required distance (X) between lightwave sources (4) such that the light beams (B) sent from the lightwave sources (4) with a certain angle (2A) do not intersect each other on the tray (3).

5. An oven (1) as in any one of the above claims, **characterized in that** the control unit (7) determines the required distance (X) between any two adjacent lightwave sources (3) over the tray with the equality of X = 2Y.tanA such that a space is not left between the regions swept by the light beams (B) sent from the lightwave sources (4) with a certain angle (2A) and that they do not intersect with each other.

6. An oven (1) as in any one of the above claims, **characterized in that** the control unit (7) provides to de-energize or energize one or more lightwave sources (4) when the distance (Y) between the upper surface of the food cooked in the tray (3) and the lightwave source (4) changes, such that the light beams (B) will affect side by side regions at the upper surface of the food cooked on the tray (3).

7. An oven (1) as in Claim 6, **characterized in that** the control unit (7) de-energizes the lightwave source (4) in the middle when the distance (Y) is increased by lowering the tray (3) to a lower level and the light beams (B) sent by the three parallel lightwave sources (4) situated on the ceiling of the cooking chamber (2) start intersecting one another and since only increasing the distance (X) between the lightwave sources (4) will not be sufficient.

8. An oven (1) as in any one of the above claims, **characterized in that** the control unit (7) adjusts the power delivered to the lightwave sources (4) depending on the distance (Y) information received from the level sensor (6).

9. An oven (1) as in Claim 2, **characterized in that** the movement mechanism (8) moves the lightwave sources (4) at different speeds during the cooking process depending on the distance (Y) information received from the level sensor (6) by the control unit (7).

10. An oven (1) as in Claim 2, **characterized in that** the movement mechanism (8) keeps the lightwave sources (4) at the desired positions for certain time intervals depending on the distance (Y) information received from the level sensor (6) by the control unit (7), providing the cooking process to be carried out.

11. An oven (1) as in Claim 2, **characterized in that** the movement mechanism (8) moves the lightwave sources (4) closer to each other depending on the distance (Y) information received from the level sensor (6) by the control unit (7), providing to send intensive light to certain regions on the tray (3).

## Patentansprüche

1. Ofen (1), umfassend eine Garungskammer (2), in der der Garungsprozess durchgeführt wird, ein Tablett (3), auf das zu garende Speisen gestellt werden, und mehrere Lichtwellenquellen (4), die an der Decke der Garungskammer (2) angeordnet sind und dafür sorgen, dass durch die abgestrahlten Lichtwellen der Garungsprozess durchgeführt wird, und **dadurch gekennzeichnet, dass** die Lichtwellenquellen (4) in der Garungskammer (2) beweglich sind, und durch einen Höhensensor (6), der den Abstand (Y) zwischen der Oberfläche der Speise, die auf dem Tablett (3) gegart wird, und der Lichtwellenquelle (4) erkennt, und eine Steuereinheit (7), die abhängig von den Informationen zum Abstand (Y), die vom Höhensensor (6) empfangen werden, die Positionen bestimmt, an die die Lichtwellenquellen (4) bewegt werden.

2. Ofen (1) nach Anspruch 1, **gekennzeichnet durch** einen Bewegungsmechanismus (8), der die Lichtwellenquellen (4) bewegt und dafür sorgt, dass ihre Positionen geändert werden, falls sich der Abstand (Y) zwischen der Oberfläche der Speise, die auf dem Tablett (3) gegart wird, und der Lichtwellenquelle (4) verändert.

3. Ofen (1) nach Anspruch 1 oder 2, **dadurch gekennzeichnet, dass** die Steuereinheit (7) den erforderlichen Abstand (X) zwischen den Lichtwellenquellen (4) bestimmt, derart, dass die Lichtstrahlen (B), die von den Lichtwellenquellen (4) mit einem bestimmten Winkel (2A) ausgesendet werden, Seite an Seite über eine bestimmter Breitenerstreckung (L) einer Region auf der Oberfläche der auf dem Tablett (3) gegarten Speise schweifen.

4. Ofen (1) nach einem der vorangehenden Ansprüche, **dadurch gekennzeichnet, dass** die Steuereinheit (7) den erforderlichen Abstand (X) zwischen Lichtwellenquellen (4) bestimmt, derart, dass die Lichtstrahlen (B), die von den Lichtwellenquellen (4) mit einem bestimmten Winkel (2A) ausgesendet werden, einander auf dem Tablett (3) nicht kreuzen.

5. Ofen (1) nach einem der vorangehenden Ansprüche, **dadurch gekennzeichnet, dass** die Steuereinheit (7) den erforderlichen Abstand (X) zwischen zwei beliebigen benachbarten Lichtwellenquellen (4) über dem Tablett (3) anhand der Gleichung X = 2Y.tanA bestimmt, derart, dass kein Platz zwischen den Regionen gelassen wird, über die Lichtstrahlen (B) schweifen, die von den Lichtwellenquellen (4) mit einem bestimmten Winkel (2A) ausgesendet werden, und dass sie einander nicht kreuzen.

6. Ofen (1) nach einem der vorangehenden Ansprüche, **dadurch gekennzeichnet, dass** die Steuereinheit (7) dafür sorgt, eine oder mehrere Lichtwellenquellen (4) zu deaktivieren oder zu aktivieren, wenn sich der Abstand (Y) zwischen der Oberfläche der Speise, die auf dem Tablett (3) gegart wird, und der Lichtwellenquelle (4) verändert, derart, dass die Lichtstrahlen (B) Seite an Seite liegende Regionen auf der Oberfläche der auf dem Tablett (3) gegarten Speise beeinflussen.

7. Ofen (1) nach Anspruch 6, **dadurch gekennzeichnet, dass** die Steuereinheit (7) die Lichtwellenquelle (4) in der Mitte deaktiviert, wenn der Abstand (Y) erhöht wird, indem das Tablett (3) auf eine geringere Höhe abgesenkt wird und die Lichtstrahlen (B), die von den drei parallelen Lichtwellenquellen (4) an der Decke der Garungskammer (2) ausgesendet werden, beginnen, einander zu kreuzen, und Vergrößerung des Abstandes (X) der Lichtwellenquellen (4) allein nicht mehr ausreichend ist.

8. Ofen (1) nach einem der vorangehenden Ansprüche, **dadurch gekennzeichnet, dass** die Steuereinheit (7) die Leistung, die an die Lichtwellenquellen (4) bereitgestellt wird, abhängig von den Informationen zum Abstand (Y) anpasst, die von dem Höhensensor (6) empfangen werden.

9. Ofen (1) nach Anspruch 2, **dadurch gekennzeichnet, dass** der Bewegungsmechanismus (8) die Lichtwellenquellen (4) während des Garungsprozesses abhängig von den Informationen zum Abstand (Y), die durch die Steuereinheit (7) vom Höhensensor (6) empfangen werden, mit unterschiedlicher Geschwindigkeit bewegt.

10. Ofen (1) nach Anspruch 2, **dadurch gekennzeichnet, dass** der Bewegungsmechanismus (8) die Lichtwellenquellen (4) abhängig von den Informationen zum Abstand (Y), die durch die Steuereinheit (7) vom Höhensensor (6) empfangen werden, für bestimmte Zeitintervalle in den gewünschten Positionen hält und dafür sorgt, dass der Garungsprozess ausgeführt wird.

11. Ofen (1) nach Anspruch 2, **dadurch gekennzeichnet, dass** der Bewegungsmechanismus (8) die Lichtwellenquellen (4) abhängig von den Informationen zum Abstand (Y), die die Steuereinheit (7) vom Höhensensor (6) empfängt, näher aneinander bewegt, um dafür zu sorgen, dass starkes Licht an bestimmte Regionen auf dem Tablett (3) geschickt wird.

## Revendications

1. Un four (1) comprenant une chambre de cuisson (2) où le processus de cuisson est effectué, une plaque à pâtisserie (3) dans laquelle des aliments à cuire sont placés et plus d'une source d'ondes lumineuses (4) qui est située sur le plafond de la chambre de cuisson (2) et qui permet la réalisation du processus de cuisson par les ondes lumineuses émises et **caractérisé en ce que** la plus d'une source d'ondes lumineuses (4) est mobile dans la chambre de cuisson (2) et par un capteur de niveau (6) qui détecte la distance (Y) entre la surface supérieure de l'aliment cuit dans la plaque à pâtisserie (3) et la source d'ondes lumineuses (4), et une unité de commande (7) qui détermine les positions dans lesquelles les sources d'ondes lumineuses (4) sont à être déplacées selon les données de distance (Y) reçues du capteur de niveau (6).

2. Un four (1) selon la Revendication 1, **caractérisé par** un mécanisme de déplacement (8) qui déplace les sources d'ondes lumineuses (4), donc changeant leurs positions dans le cas où la distance (Y) entre la surface supérieure de l'aliment cuit dans la plaque à pâtisserie (3) et la source d'ondes lumineuses (4) changerait.

3. Un four (1) selon la Revendication 1 ou 2, **caractérisé en ce que** l'unité de commande (7) détermine la distance requise (X) entre les sources d'ondes lumineuses (4) de telle sorte que les faisceaux lumineux (B) émis par les sources d'ondes lumineuses (4) avec un certain angle (2A) balaient côte à côte une certaine largeur (L) de la région sur la surface supérieure de l'aliment cuit dans la plaque à pâtisserie (3).

4. Un four (1) selon l'une quelconque des revendications précédentes, **caractérisé en ce que** l'unité de commande (7) détermine la distance requise (X) entre les sources d'ondes lumineuses (4) de telle sorte que les faisceaux lumineux (B) émis par les sources d'ondes lumineuses (4) avec un certain angle (2A) ne se coupent pas sur la plaque à pâtisserie (3).

5. Un four (1) selon l'une quelconque des revendications précédentes, **caractérisé en ce que** l'unité de commande (7) détermine la distance requise (X) entre deux sources d'ondes lumineuses (4) adjacentes sur la plaque à pâtisserie (3) selon la équation X = 2Y.tanA de telle sorte qu'un espace n'est pas laissé entre les régions balayées par les faisceaux lumineux (B) émis par les sources d'ondes lumineuses (4) avec un certain angle (2A) et qu'ils ne se coupent pas.

6. Un four (1) selon l'une quelconque des revendications précédentes, **caractérisé en ce que** l'unité de commande (7) permet l'activation ou la désactivation d'une ou plusieurs sources d'ondes lumineuses (4) si la distance (Y) entre la surface supérieure de l'aliment cuit dans la plaque à pâtisserie (3) et la source d'ondes lumineuses (4) change, de telle sorte que les faisceaux lumineux (B) affectent des régions côte à côte à la surface supérieure de l'aliment cuit dans la plaque à pâtisserie (3).

7. Un four (1) selon la Revendication 6, **caractérisé en ce que** l'unité de commande (7) désactive la source d'ondes lumineuses (4) dans le milieu si la distance (Y) est augmentée en descendant la plaque à pâtisserie (3) à un niveau plus bas et les faisceaux lumineux (B) émis par les trois sources d'ondes lumineuses (4) parallèles situées sur le plafond de la chambre de cuisson (2) commencent à se couper et puisque l'augmentation de la distance (X) entre les sources d'ondes lumineuses (4) ne sera pas suffisante tout seul.

8. Un four (1) selon l'une quelconque des revendications précédentes, **caractérisé en ce que** l'unité de commande (7) règle la puissance livrée aux sources d'ondes lumineuses (4) selon les données de distance (Y) reçues du capteur de niveau (6).

9. Un four (1) selon la Revendication 2, **caractérisé en ce que** le mécanisme de déplacement (8) déplace les sources d'ondes lumineuses (4) à différentes vitesses pendant le processus de cuisson selon les données de distance (Y) reçues du capteur de niveau (6) par l'unité de commande (7).

10. Un four (1) selon la Revendication 2, **caractérisé en ce que** le mécanisme de déplacement (8) maintient les sources d'ondes lumineuses (4) aux positions désirées pour certaines intervalles de temps selon les données de distance (Y) reçues du capteur de niveau (6) par l'unité de commande (7), permettant la réalisation du processus de cuisson.

11. Un four (1) selon la Revendication 2, **caractérisé en ce que** le mécanisme de déplacement (8) déplace les sources d'ondes lumineuses (4) plus proche l'une à l'autre selon les données de distance (Y) reçues du capteur de niveau (6) par l'unité de commande (7), permettant l'émission de la lumière à forte intensité à certaines régions sur la plaque à pâtisserie (3).
